# EUROPÄISCHE PATENTSCHRIFT

(11) **EP 2 368 850 B1**
(45) Veröffentlichungstag und Bekanntmachung des Hinweises auf die Patenterteilung: **26.12.2012**
(21) Anmeldenummer: 11152455.9
(22) Anmeldetag: 28.01.2011
(51) Int. Cl.: C01G 45/00, C01G 51/00, C01G 53/00

(54) **Verfahren zur Herstellung von oxidischen Verbindungen**
Producing oxidic compounds
Procédé destiné à la production de composés oxydés

(30) Priorität: 16.02.2010 EP 10153684; 29.01.2010 EP 10152110
(43) Veröffentlichungstag der Anmeldung: 28.09.2011
(73) Patentinhaber: BASF SE, 67056 Ludwigshafen (DE)
(72) Erfinder: Lampert, Jordan Keith, 67063, Ludwigshafen (DE); Bramnik, Kirill, Jersey City, NJ 07310 (US); Heilek, Jörg, 69245, Bammental (DE)

(56) Entgegenhaltungen:
- EP-A1- 0 717 455
- DE-A1- 19 520 874
- US-A1- 2009 194 734

## Beschreibung

Die vorliegende Erfindung betrifft ein Verfahren zur Herstellung von oxidischen Verbindungen der allgemeinen Formel (1)

Li_{z}MₓOy (1)

in denen die Variablen wie folgt gewählt sind:
- M: ein oder mehrere Elemente der Gruppen 2 bis 12 des Periodensystems der Elemente, insbesondere gewählt aus Co, Mn, Ni, Fe, Al, Mg,
- x: eine Zahl im Bereich von 1 bis 2,
- y: eine Zahl im Bereich von 2 bis 4,
- z: eine Zahl im Bereich von 0,5 bis 1,5,
dadurch gekennzeichnet, dass man Mischungen, gewählt aus Oxiden, Hydroxiden, Carbonaten und Nitraten von Li und von M, miteinander in einem Reaktionsgefäß, das um eine Achse unvollständige Drehbewegungen ausführt, auf Temperaturen im Bereich von 600 bis 1200 °C erhitzt.

Für verschiedene Anwendungen benötigt man heutzutage oxidische Verbindungen, die Lithium-haltig sind, beispielsweise für sogenannte Lithium-lonen-Batterien. In LithiumIonen-Batterien wird der Ladungstransport nicht durch Protonen in mehr oder weniger stark hydratisierter Form gewährleistet, sondern durch Lithiumionen in einem nicht-wässrigen Lösungsmittel oder in einem nicht-wässrigen Lösungsmittelsystem. LithiumIonen-Batterien enthalten mindestens zwei Elektroden, von denen mindestens eine, die Kathode, aus stark korrosivem Material gefertigt werden kann. Beispiele für derartige Materialien sind Mischoxide und Interkalationsverbindungen von Lithiumoxid.

Bei den Elektroden, insbesondere bei den Kathoden, legt man auf ein besonders gleichmäßig aufgebautes Material Wert. Bisherige Herstellungsverfahren lassen diesbezüglich jedoch noch zu wünschen übrig.

Bisherige Herstellungsverfahren schlagen vor, dass man geeignete Pulver miteinander vermischt und anschließend bei hohen Temperaturen nach Art einer Feststoffreaktion miteinander zur Reaktion bringt. Die Suche nach geeigneten Öfen hat jedoch bisher nur solche Lösungen hervorgebracht, die nicht optimal sind.

Tunnelöfen und Rollenöfen sind als solche in verschiedenen Varianten bekannt und umfassen mehrere Wagen oder Tiegel, auf denen das umzusetzende Material als Brenngut liegt und die durch den beheizten Ofen bewegt werden. Mit Hilfe derartiger Öfen lassen sich Pulver thermisch umsetzen.

In DE 10 2007 024 587 wird eine spezielle Variante, ein Kassettenofen, zur Herstellung von Kohlenstoffanoden empfohlen. Man beobachtet jedoch, dass in vielen Fällen ein Pulver erhalten wird, das eine uneinheitliche Zusammensetzung aufweist. Außerdem sind die Verweilzeiten in derartigen Öfen in der Regel lang, und die Kapazität und/oder die Raum/Zeit-Ausbeute ist daher nicht befriedigend.

Zur Umsetzung von pulverförmigen Materialien sind weiterhin Drehrohröfen bekannt. In Drehrohröfen, die in der Regel leicht geneigt sind, wird im Vergleich zu Tunnelöfen und Rollenöfen in der Regel eine deutlich bessere Homogenisierung des Produkts erreicht, und die Raum-Zeit-Ausbeute ist aufgrund der gesenkten Verweilzeit besser. Im vorliegenden Fall werden jedoch bei der Verwendung von Drehrohröfen andere Probleme beobachtet. So sind Li-haltige Mischoxide in vielen Fällen stark korrosiv, was die Wahl des Materials, welches für den Drehrohrofen geeignet ist, stark einschränkt.

Bei keramischen Drehrohröfen, die ausreichend stabil gegenüber Einwirkung von stark korrosiven Li-Salzen sind, ist allerdings der Wärmeübertrag durch die keramischen Wände bei einer indirekten Beheizung nicht optimal. Außerdem sind keramische Drehrohre werkstoffbedingt nur in vergleichsweise kleinen Baugrößen fertigbar und betreibbar und daher nur für vergleichsweise kleine Produktionskapazitäten geeignet.

Schließlich beobachtet man in zahlreichen Modifikationen eine starke Staubbildung und somit eine breite Partikelgrößenverteilung mit einem unerwünscht hohen Anteil an Feinstaub.

Es bestand also die Aufgabe, ein Verfahren bereit zu stellen, welches geeignet ist, Li-haltige oxidische Materialien herzustellen, die als Kathodenmaterialien für LithiumIonen-Batterien geeignet sind. Es bestand insbesondere die Aufgabe, solche oxidische Materialien herzustellen, die eine homogene Zusammensetzung aufweisen und somit zur Herstellung von Elektrodenmaterialien gut geeignet sind. Weiterhin bestand die Aufgabe, pulverförmige Materialien bereit zu stellen, die zur Herstellung von Li-lonen-Batterien besonders geeignet sind.

Dementsprechend wurde das eingangs definierte Verfahren gefunden, das im Rahmen der vorliegenden Schrift auch als erfindungsgemäßes Verfahren bezeichnet wird.

Das erfindungsgemäße Verfahren dient zur Herstellung von oxidischen Verbindungen. Dabei ist es im Rahmen der vorliegenden Erfindung möglich, dass es sich bei oxidischen Verbindungen um Mischoxide, Interkalationsverbindungen, Schichtoxide oder Spinelle handeln. Vorzugsweise handelt es sich um Schichtoxide.

Erfindungsgemäß hergestellte oxidische Verbindungen haben die allgemeine Formel (l) ,

Li_{z}MₓO_{y} (l)

in denen die Variablen wie folgt gewählt sind:
- M: ein oder mehrere Übergangsmetalle bzw. Elemente der Gruppen 2 bis 12 des Periodensystems der Elemente, bevorzugt Mg, Al oder Elemente der Gruppen 5 bis 10 des Periodensystems der Elemente, besonders bevorzugt gewählt aus Co, Mn, Ni, Fe, Al, Mg. M kann in den Oxidationsstufen +1 bis +4 vorliegen, bevorzugt sind die Oxidationsstufen +2 und +3, besonders bevorzugt ist bei Al die Oxidationsstufe +3 und bei Co, Mn, Ni, Fe, und Mg die Oxidationsstufe +2.

In oxidischer Verbindung der Formel (l) kann M für Kombinationen von mehreren Metallen stehen, beispielsweise für Kombinationen von Co und Mn oder für Kombinationen von Ni und Mn. Andere beispielhaft genannte Kombinationen sind Ni, Co, Al, und Ni, Co, Mn. Dabei können die genannten Metalle in gleichen oder verschiedenen molaren Anteilen vorliegen. In einer Ausführungsform der vorliegenden Erfindung steht M für Ni, Co, Mn in jeweils gleichen molaren Anteilen.

In einer anderen Ausführungsform der vorliegenden Erfindung steht M für Ni_{0,6}CO_{0,2}Mn₀,₂. In einer anderen Ausführungsform der vorliegenden Erfindung steht M für Ni₀,₅CO₀,₂Mn₀,₃. In einer anderen Ausführungsform der vorliegenden Erfindung steht M für Ni₀,₄CO₀,₂Mn₀,₄.

In einer anderen Ausführungsform der vorliegenden Erfindung wird M gewählt aus Ni₀,₄CO_{0,3}Mn_{0,3}, Ni_{0,45}CO_{0,1}Mn_{0,}45, Ni₀,₄CO₀,₁Mn₀,₅ und Ni_{0,5}CO_{0,1}Mn₀,4.
- x: ist eine Zahl im Bereich von 1 bis 2, wobei x ein Mittelwert sein kann und nicht auf ganze Zahlen beschränkt ist. Bevorzugt ist x gleich 1.
- y: ist eine Zahl im Bereich von 2 bis 4, wobei y ein Mittelwert sein kann und nicht auf ganze Zahlen beschränkt ist. Bevorzugt ist y gleich 2 + (x-1) + (z-1).
- z: ist eine Zahl im Bereich von 0,5 bis 1,5, bevorzugt 0,75 bis 1,4.

Zur Durchführung des erfindungsgemäßen Verfahrens geht man aus von Mischungen von Oxiden, Hydroxiden, Carbonaten und Nitraten von Lithium und von M, also dem Übergangsmetall bzw. den Übergangsmetallen, mit mindestens einer Lithiumverbindung. Dabei können das oder die Oxide, Hydroxide, Carbonate oder Nitrate von M einerseits und die Lithiumverbindung gleiche oder verschiedene Gegenionen, bezogen auf M und Lithium, aufweisen.

In einer Ausführungsform der vorliegenden Erfindung handelt es sich bei Oxiden, Carbonaten, Hydroxiden und Nitraten von M um stöchiometrisch einheitliche Verbindungen.

In einer anderen Ausführungsform der vorliegenden Erfindung handelt es sich bei Oxiden, Carbonaten, Hydroxiden und Nitraten von M um stöchiometrisch uneinheitliche Verbindungen. Geeignet sind beispielsweise basische Carbonate, Oxid-Hydroxide beispielsweise der Formel MOOH, basische Hydroxide und basische Nitrate.

Weiterhin können Hydroxide, Oxide, Carbonate und/oder Nitrate von M und auch von Lithium in solvatisierter, insbesondere in hydratisierter Form, oder in nicht solvatisierter bzw. in nicht hydratisierter Form vorliegen.

Vor der eigentlichen Reaktion vermischt man Oxide, Hydroxide, Carbonate und/oder Nitrate von Lithium und von M miteinander und stellt dabei das gewünschte stöchiometrische Verhältnis von M und Li ein.

Das erfindungsgemäße Verfahren führt man in einem Reaktionsgefäß durch, dessen Form man in weiten Grenzen wählen kann, das aber vorzugsweise im Wesentlichen rohrförmig ist.

Unter "im Wesentlichen rohrförmig" wird im Rahmen der vorliegenden Erfindung verstanden, dass die Länge des betreffenden Reaktionsgefäßes deutlich größer ist als der mittlere Durchmesser, gemessen am Querschnitt, und dass der Querschnitt über die Länge des Reaktionsgefäßes im Wesentlichen gleich ist.

In einer Ausführungsform der vorliegenden Erfindung ist der Querschnitt des eingesetzten Reaktionsgefäßes kreisförmig.

In einer anderen Ausführungsform der vorliegenden Erfindung weicht der Querschnitt des eingesetzten Reaktionsgefäßes von der Kreisform ab, und es handelt sich beim Querschnitt beispielsweise um ein Polygon mit abgerundeten Ecken, beispielsweise ein Rechteck oder ein gleichseitiges oder nicht gleichseitiges Fünf- oder Sechseck mit jeweils abgerundeten Ecken, wobei eine oder mehrere der Ecken jeweils abgerundet sein können.

In einer anderen Ausführungsform der vorliegenden Erfindung ist der Querschnitt des im erfindungsgemäßen Verfahren eingesetzten Reaktionsgefäßes elliptisch.

In einer Ausführungsform der vorliegenden Erfindung ist das Reaktionsgefäß im Bereich von 2 bis 200 m lang, bevorzugt 3 bis 100 m und besonders bevorzugt 5 bis 50 m.

In einer Ausführungsform der vorliegenden Erfindung weist das Reaktionsgefäß einen mittleren Durchmesser des Querschnitts im Bereich von 200 bis 10000 mm, bevorzugt 300 bis 5000 mm und besonders bevorzugt 500 bis 4000 mm auf. Unter dem mittleren Durchmesser ist bei nicht kreisförmigen Querschnitten der sogenannte hydraulische Durchmesser des Querschnitts zu verstehen, der sich als Quotient (4.Querschnitt) /(Umfang der Querschnitts) berechnet.

In einer Ausführungsform der vorliegenden Erfindung weist das Reaktionsgefäß ein Verhältnis aus Länge zu mittlerem Durchmesser im Bereich von bzw. hydraulischem Durchmesser im Bereich von 50:1 bis 2:1, bevorzugt 30:1 bis 4:1 und besonders bevorzugt 20:1 bis 7:1 auf.

Bei der Durchführung des erfindungsgemäßen Verfahrens führt das Reaktionsgefäß um eine Achse, vorzugsweise um die Längsachse, unvollständige Drehbewegungen durch.

In einer Ausführungsform der vorliegenden Erfindung handelt es sich bei unvollständigen Drehbewegungen um kontinuierliche unvollständige Drehbewegungen, in einer anderen Ausführungsform der vorliegenden Erfindung um diskontinuierliche unvollständige Drehbewegungen.

Unter "unvollständigen Drehbewegungen" wird im Rahmen der vorliegenden Erfindung verstanden, dass die Drehbewegungen keine Drehung um 360° bedeuten, sondern weniger als 360°. Das Ausmaß der Drehbewegungen kann man beispielsweise durch den von der unvollständigen Drehbewegung überstrichenen Winkel (englisch: field of traverse) charakterisieren. In einer Ausführungsform der vorliegenden Erfindung liegt der von der unvollständigen Drehbewegung überstrichenen Winkel im Bereich von 40 bis 300°, bevorzugt im Bereich von 60 bis 250° und besonders bevorzugt im Bereich von 80 bis 180°.Ganz besonders bevorzugt liegt der von der unvollständigen Drehbewegung überstrichene Winkel im Bereich von 90 bis 130°. Den von der unvollständigen Drehbewegung überstrichenen Winkel kann man vorzugsweise zwischen den beiden Endauslenkungen (Umkehrpunkten) der Drehbewegung bestimmen.

In einer Ausführungsform führt das Reaktionsgefäß pendelnde oder schaukelnde Drehbewegungen durch.

In einer Ausführungsform der vorliegenden Erfindung führt das Reaktionsgefäß die pendelnde Drehbewegung mit einer Frequenz von 0,1 bis 100 Pendelbewegungen pro Minute, bevorzugt mit 1 bis 50 Pendelbewegungen pro Minute und besonders bevorzugt mit 2 bis 15 Pendelbewegungen pro Minute durch. Unter einer Pendelbewegung wird hierbei die Hin- und Herbewegung verstanden, bis wieder dieselbe Position in gleicher Bewegungsrichtung durchlaufen wird, z. B. von einer Endauslenkung in die andere und wieder zurück.

Zur Durchführung des erfindungsgemäßen Verfahrens erhitzt man auf Reaktionstemperaturen im Bereich von 600 bis 1200°C, bevorzugt 650 bis 1050°C. Dabei kann das Erhitzen direkt oder indirekt erfolgen oder durch Kombinationen von direktem und indirektem Erhitzen. Dabei beziehen sich Temperaturangaben vorzugsweise auf die Höchsttemperatur und insbesondere auf die Temperatur, die man im Gasraum oberhalb und in Nähe der Reaktionsmischung messen kann.

In einer Ausführungsform der vorliegenden Erfindung ist die Temperatur innerhalb des Reaktionsgefäßes gleich oder im Wesentlichen gleich, d. h. Höchsttemperatur und Mindesttemperatur unterscheiden sich um maximal um 25°C. In einer anderen Ausführungsform der vorliegenden Erfindung weist das Reaktionsgefäß ein Temperaturprofil auf, wobei Höchsttemperatur und Mindesttemperatur im Bereich von bis zu 500°C, bevorzugt bis zu 250°C auseinander liegen können.

In einer Ausführungsform der vorliegenden Erfindung hat die Achse, um die vorstehend beschriebene unvollständige Drehbewegungen ausgeführt werden, und somit das Reaktionsgefäß eine Neigung im Bereich von 1 bis 20° zur Horizontalen, bevorzugt sind 2 bis 10° und besonders bevorzugt bis 7°.

In einer Ausführungsform der vorliegenden Erfindung handelt es sich bei dem Reaktionsgefäß um einen Pendelrohrofen. Pendelrohröfen sind als solche bekannt und beispielsweise in EP 0 985 642 A.

In einer Ausführungsform der vorliegenden Erfindung führt man das erfindungsgemäße Verfahren in einer Sauerstoff-haltigen Atmosphäre, beispielsweise Luft, oder in einer mit Sauerstoff angereicherten Atmosphäre durch. In einer Ausführungsform der vorliegenden Erfindung führt man das erfindungsgemäße Verfahren in einer Sauerstoffatmosphäre durch, die neben Sauerstoff lediglich flüchtige Reaktionsprodukte enthält.

In einer Ausführungsform der vorliegenden Erfindung stellt man Geschwindigkeit und Ausmaß von unvollständigen Drehbewegungen einerseits und die Neigung des Reaktionsgefäßes andererseits so ein, dass die mittlere Verweilzeit der Mischung im Reaktionsgefäß im Bereich von einer halben Stunde bis zu 15 Stunden liegt, bevorzugt im Bereich von einer bis 10 Stunden. Dabei passt man das Ausmaß von unvollständigen Drehbewegungen und die Neigung des Reaktionsgefäßes abhängig von dem sich ergebenden Bewegungsverhalten der Mischung an.

Vorzugsweise betreibt man das Reaktionsgefäß im stationären Zustand.

In einer Ausführungsform der vorliegenden Erfindung weist das Reaktionsgefäß ein Einlaufgehäuse und ein Auslaufgehäuse oder Austraggehäuse auf, die sich bevorzugt im Wesentlichen einander gegenüberliegend an den jeweiligen Enden des Reaktionsraums befinden.

In einer Ausführungsform der vorliegenden Erfindung setzt man Mischung von Oxiden, gewählt aus Oxiden, Hydroxiden, Carbonaten und Nitraten von Li und von M in pulverförmiger oder pastöser Form ein.

Wünscht man die Mischung von Oxiden, gewählt aus Oxiden, Hydroxiden, Carbonaten und Nitraten von Li und von M in pastöser Form einzusetzen, so kann die Paste mit Wasser oder einem Alkohol angemacht sein. Als Alkohole sind beispielsweise C₁-C₄-Alkanole geeignet, insbesondere Ethanol, oder Polyethylenglykol, beispielsweise mit einem mittleren Molekulargewicht M_{w} im Bereich von 500 bis 2000 g/mol. Eine geeignete Paste kann beispielsweise einen Gehalt an Feststoffen im Bereich von 20 bis 95 Gew.-%, bevorzugt von 40 bis 90 Gew.-% aufweisen. Unter den Reaktionsbedingungen kann der Alkohol verbrennen, wobei es bevorzugt ist, zur Gewährleistung einer vollständigen Verbrennung in einer mit Sauerstoff angereicherten Atmosphäre zu arbeiten.

In einer Ausführungsform der vorliegenden Erfindung läuft bei der Durchführung des erfindungsgemäßen Verfahrens mindestens eine der folgenden Reaktionen ab:

2 LiOH-H₂O + 2 M(OH)₂ + ½ O₂ → 2 LiMO₂ + 5 H₂O

Li₂CO₃ + 2 M(OH)₂ + ½ O₂ → 2 LiMO₂ + 2 H₂O + CO₂

LiNO₃ + M(OH)2 → LiMO₂ + NO₂ + H₂O

Statt M(OH)₂ kann man zur Durchführung der vorstehend genannten Reaktionen MO-aq einsetzen.

In einer Ausführungsform zieht man unter den Reaktionsbedingungen gasförmige Nebenprodukte wie beispielsweise Wasser, CO₂ und Stickoxide wie beispielsweise NO₂ kontinuierlich aus dem Reaktionsgefäß ab. In einer anderen Ausführungsform der vorliegenden Erfindung kann man unter den Reaktionsbedingungen gasförmige Nebenprodukte in Intervallen aus dem Reaktionsgefäß abziehen.

Natürlich ist es bevorzugt, den Strom von unter den Reaktionsbedingungen gasförmigen Nebenprodukten aufzureinigen und gegebenenfalls Maßnahmen zur Abgasreinigung oder Abwärmerückgewinnung vorzunehmen. Eine Abgasreinigung kann insbesondere dann erforderlich sein, wenn man in größerem Maßstab Nitrate einsetzt. Eine Abgasreinigung kann beispielsweise eine NOₓ-Zersetzung und/oder eine Abtrennung von Staub beinhalten.

In einer Ausführungsform der vorliegenden Erfindung setzt man ein Reaktionsgefäß ein, das im Wesentlichen aus einem oder mehreren keramischen Werkstoffen besteht oder mit keramischem Material ausgekleidet, beispielsweise ausgemauert ist.

In einer Ausführungsform der vorliegenden Erfindung kann man ein Reaktionsgefäß einsetzen, das zumindest partiell mit Keramikziegeln oder Keramiksteinen ausgekleidet ist, beispielsweise mit Keramikziegeln oder Keramiksteinen auf Basis von Al₂O₃ oder auf Basis von mit MgO dotiertem Al₂O₃.

In einer Ausführungsform der vorliegenden Erfindung kann man das Reaktionsgefäß direkt erhitzen, beispielsweise durch einen oder mehreren an der Innenseite des Reaktionsgefäßes installierten Brenner, bei dem bzw. denen es sich beispielsweise um einen elektrischen Heizstrahler oder eine Kombination von mehreren elektrischen Heizstrahlern handeln kann. In einer Variante können mit Gas, bevorzugt mit Erdgas betriebene Brenner zum Einsatz kommen.

Durch das erfindungsgemäße Verfahren erhält man oxidische Verbindung mit einheitlicher chemischer Zusammensetzung und vorzugsweise enger Partikeldurchmesserverteilung. Die erfindungsgemäß hergestellten oxidischen Verbindungen eignen sich daher besonders gut zur Herstellung von Elektroden, beispielsweise Anoden oder Kathoden, für Lithium-lonen-Batterien. Die erfindungsgemäß hergestellten oxidischen Verbindungen enthalten daher in der Regel nur wenig unerwünschte Verunreinigungen, die aus dem Wandmaterial des Reaktionsgefäßes stammen.

Außerdem lassen sich die nach dem erfindungsgemäßen Verfahren hergestellten oxidischen Verbindungen mit hohen Raum-Zeit-Ausbeuten und mit hohen Kapazitäten herstellen.

## Patentansprüche

1. Verfahren zur Herstellung von oxidischen Verbindungen der allgemeinen Formel (I)
Li_{z}MₓO_{y} (I)
in denen die Variablen wie folgt gewählt sind:
M ein oder mehrere Elemente der Gruppen 2 bis 12 des Periodensystems der Elemente,
x eine Zahl im Bereich von 1 bis 2,
y eine Zahl im Bereich von 2 bis 4,
z eine Zahl im Bereich von 0,5 bis 1,5,
**dadurch gekennzeichnet, dass** man Mischungen, gewählt aus Oxiden, Hydroxiden, Carbonaten und Nitraten von Li und von M, miteinander in einem Reaktionsgefäß, das um eine Achse unvollständige Drehbewegungen ausführt, auf Reaktionstemperaturen im Bereich von 600 bis 1200 °C erhitzt.

2. Verfahren nach Anspruch 1, **dadurch gekennzeichnet, dass** die Achse, um die unvollständige Drehbewegungen ausgeführt werden, eine Neigung im Bereich von 1 bis 20° zur Horizontalen hat.

3. Verfahren nach Anspruch 1 oder 2, **dadurch gekennzeichnet, dass** es sich bei dem Reaktionsgefäß um einen Pendelrohrofen handelt.

4. Verfahren nach einem der Ansprüche 1 bis 3, **dadurch gekennzeichnet, dass** das Reaktionsgefäß eine Neigung im Bereich von 1 bis 20° aufweist.

5. Verfahren nach einem der Ansprüche 1 bis 4, **dadurch gekennzeichnet, dass** man es in einer Sauerstoff-haltigen oder mit Sauerstoff angereicherten Atmosphäre durchführt.

6. Verfahren nach einem der Ansprüche 1 bis 5, ,**dadurch gekennzeichnet, dass** man Mischung von Oxiden, gewählt aus Oxiden, Hydroxiden, Carbonaten und Nitraten von Li und von M in pulverförmiger oder pastöser Form einsetzt.

7. Verfahren nach Anspruch 6, **dadurch gekennzeichnet, dass** man Mischung von Oxiden, gewählt aus Oxiden, Hydroxiden, Carbonaten und Nitraten von Li und von M in pastöser Form einsetzt, wobei die Paste mit Wasser oder einem Alkohol angemacht ist.

8. Verfahren nach einem der Ansprüche 1 bis 7, **dadurch gekennzeichnet, dass** der von der unvollständigen Drehbewegung überstrichene Winkel im Bereich von 60 bis 250° liegt.

9. Verfahren nach einem der Ansprüche 1 bis 8, **dadurch gekennzeichnet, dass** man die Reaktionstemperaturen zumindest partiell durch direkte Beheizung einstellt.

10. Verfahren nach einem der Ansprüche 1 bis 9, **dadurch gekennzeichnet, dass** man M wählt aus Co, Mn, Ni, Fe, Al und Mg.

## Claims

1. A process for producing oxidic compounds of the general formula (I)
Li_{z}MₓO_{y} (I)
where
M is one or more elements from groups 2 to 12 of the periodic table,
x is from 1 to 2,
y is from 2 to 4, and
z is from 0.5 to 1.5,
which process comprises heating mixtures selected from oxides, hydroxides, carbonates and nitrates of Li and of M together to reaction temperatures in the range from 600 to 1200°C in a reaction vessel performing incomplete rotary motions about one axis.

2. The process according to claim 1 wherein the axis about which incomplete rotary motions are performed has an inclination in the range from 1 to 20° relative to the horizontal plane.

3. The process according to claim 1 or 2 wherein the reaction vessel comprises a pendulum kiln.

4. The process according to any one of claims 1 to 3 wherein the reaction vessel has an inclination in the range from 1 to 20°.

5. The process according to any one of claims 1 to 4 in an oxygen-containing or oxygen-enriched atmosphere.

6. The process according to any one of claims 1 to 5 utilizing mixture of oxides selected from oxides, hydroxides, carbonates and nitrates of Li and of M in pulverulent or pasty form.

7. The process according to claim 6 utilizing mixture of oxides selected from oxides, hydroxides, carbonates and nitrates of Li and of M in pasty form, wherein the paste is prepared with water or an alcohol.

8. The process according to any one of claims 1 to 7 wherein the field of traverse of the incomplete rotary motion is in the range from 60 to 250°.

9. The process according to any one of claims 1 to 8 wherein the reaction temperatures are at least partially set by direct heating.

10. The process according to any one of claims 1 to 9 wherein M is selected from Co, Mn, Ni, Fe, Al and Mg.

## Revendications

1. Procédé pour la production de composés de type oxyde de formule générale (I)
Li_{z}MₓO_{y} (I).
dans laquelle les variables sont choisies comme suit :
M un ou plusieurs éléments des groupes 2 à 12 du système périodique des éléments,
x un nombre dans la plage de 1 à 2,
y un nombre dans la plage de 2 à 4,
z un nombre dans la plage de 0,5 à 1,5,
**caractérisée en ce qu'**on chauffe à des températures de réaction dans la plage de 600 à 1 200 °C des mélanges, choisis parmi des oxydes, hydroxydes, carbonates et nitrates de Li et de M, ensemble dans un récipient de réaction qui effectue des mouvements de rotation incomplète autour d'un axe.

2. Procédé selon la revendication 1, **caractérisé en ce que** l'axe autour duquel sont effectués des mouvements de rotation incomplète a une inclinaison dans la plage de 1 à 20 °C par rapport à l'horizontale.

3. Procédé selon la revendication 1 ou 2, **caractérisé en ce que** le récipient de réaction consiste en un four rotatif pendulaire.

4. Procédé selon l'une quelconque des revendications 1 à 3, **caractérisé en ce que** le récipient de réaction présente une inclinaison dans la plage de 1 à 20°.

5. Procédé selon l'une quelconque des revendications 1 à 4, **caractérisé en ce qu'**on l'effectue dans une atmosphère contenant de l'oxygène ou enrichie avec de l'oxygène.

6. Procédé selon l'une quelconque des revendications 1 à 5, **caractérisé en ce qu'**on utilise un mélange d'oxydes, choisis parmi des oxydes, hydroxydes, carbonates et nitrates de Li et de M sous forme pulvérulente ou pâteuse.

7. Procédé selon la revendication 6, **caractérisé en ce qu'**on utilise un mélange d'oxydes, choisis parmi des oxydes, hydroxydes, carbonates et nitrates de Li et in sous forme pâteuse, la pâte étant préparée avec de l'eau ou un alcool.

8. Procédé selon l'une quelconque des revendications 1 à 7, **caractérisé en ce que** l'angle décrit par le mouvement de rotation incomplète se situe dans la plage de 60 à 250 °C.

9. Procédé selon l'une quelconque des revendications 1 à 8, **caractérisé en ce qu'**on ajuste les températures de réaction au moins en partie par chauffage direct.

10. Procédé selon l'une quelconque des revendications 1 à 9, **caractérisé en ce qu'**on choisit M parmi Co, Mn, Ni, Fe, Al et Mg.
